# EUROPEAN PATENT SPECIFICATION

(11) **EP 3 035 764 B1**
(45) Date of publication and mention of the grant of the patent: **29.08.2018**
(21) Application number: 14307029.0
(22) Date of filing: 15.12.2014
(51) Int. Cl.: H04W 74/08, H04W 88/10

(54) **REDUCING COLLISION BETWEEN CELLULAR AND NON-CELLULAR TRANSMISSIONS**
VERRINGERUNG VON KOLLISIONEN ZWISCHEN ZELLULAREN UND NICHTZELLULAREN ÜBERTRAGUNGEN
RÉDUCTION DES COLLISIONS ENTRE LES TRANSMISSIONS CELLULAIRES ET NON CELLULAIRES

(43) Date of publication of application: 22.06.2016
(73) Proprietor: Alcatel Lucent, 91620 Nozay (FR)
(72) Inventor: Lopez-Perez, David, Dublin, 15 (IE); Claussen, Holger, Dublin, 15 (IE); Ho, Lester Tse We, Dublin, 15 (IE)
(74) Representative: Sarup, David Alexander

(56) References cited:
- EP-A1- 2 757 850
- EP-A2- 2 696 530
- US-A1- 2013 343 288
- US-A1- 2014 126 504

## Description

### FIELD OF THE INVENTION

The field of the invention relates to the field of wireless communication and in particular, to communication in areas where both cellular and non-cellular nodes transmit in the same frequency bandwidth.

### BACKGROUND

As wireless communication traffic increases, there is a need to increase the capacity for transmitting such communications. One way of doing this is to increase the bandwidth provided for these communication signals. Currently cellular communications are generally transmitted within a licensed bandwidth, the network operators paying large sums of money for their portion of this bandwidth. Higher frequencies are not subject to licenses but at these higher frequencies path losses increase and transmission distances decrease correspondingly.

One unlicensed bandwidth that has a frequency that is not much higher than the licensed bands is used by Wi-Fi systems. Use of this additional bandwidth by a cellular base station providing radio coverage within a cell of the cellular network would increase the capacity of that base station but problems of collision between the signals from the cellular base station and the Wi-Fi access points might arise.

In this regard cellular networks transmit signals using scheduling and OFDMA, (orthogonal frequency division multiple access) so that signals to multiple users can be transmitted and collision between these signals avoided or at least reduced. Wi-Fi systems use CSMA (carrier sense multiple access) to reduce collisions, so that prior to transmitting data they sense to determine if the frequency band is currently being used or not.

One problem that might arise is that due to the Wi-Fi listening before transmitting, interference from the base station in the required frequency band may result in the Wi-Fi having very little access to the communication channel.

EP2757850 discloses the transmission of signals by cellular devices in an unlicensed frequency band, where interference with other devices is mitigated by the cellular device listening to determine if the channel is idle prior to transmission. When the channel is idle the device may transmit a channel reservation signal, and when the channel is busy it may transmit a lower power signal and/or use a more robust coding mechanism.

US2013/0343288 discloses the transmission of signals within an unlicensed bandwidth and the use of power adjustment to reduce interference, wherein the strength of a signal to use when the WiFi is active is determined based on the calculated signal strength received at the WiFi devices.

US2014/G126504 is also concerned with cellular transmissions being made in an unlicensed frequency band and addresses the problem of interference by use of a booking signal to reserve the channel prior to transmitting a communication.

It would be desirable for cellular base stations and non-cellular communication access points to be able to share the use of the same frequency band for communication, without one of the technologies having an undue proportion of the resources.

### SUMMARY

The invention is defined by the appended claims. A first aspect of the present invention provides a method performed at a base station providing radio coverage within a cell of a cellular wireless communication network, said method comprising: prior to transmitting a signal within a frequency band used by at least one access point located within said cell and supporting non-cellular wireless communication, monitoring to determine whether said frequency band is currently being used for transmitting signals; in response to detecting that said frequency band is currently idle, transmitting a booking signal in said frequency band, said booking signal indicating to said at least one access point that said frequency band is not available for use; and transmitting said signal in said frequency band; and in response to detecting that said frequency band is currently being used to transmit signals, selecting user equipment that are determined to be located close enough to said base station to successfully receive signals at a power level below a predetermined threshold power level and scheduling transmission of signals at said power level below said predetermined threshold power level to said selected user equipment.
The inventors of the present invention recognised that due to the different ways that cellular and non-cellular networks schedule signalling, coexistence of the two techniques in a same frequency bandwidth can be problematic. They have addressed this by performing an additional step at the base station of prior to transmitting a signal on the bandwidth, monitoring to see if it is in use. This monitoring allows the base station to be aware of use by non-cellular devices such as Wi-Fi access points and this allows it to control its own use with knowledge of use of the bandwidth by the other technology.

Furthermore, the inventors recognised that the transmission of signals by the different types of devices occurs asynchronously, such that a time slot for starting a transmission in the cellular network is not necessarily aligned with one in the non-cellular network. This can cause problems, where a base station detects that the frequency band is not in use, but does not start transmitting until a cellular transmission time slot starts. In the meantime, a time slot for transmitting in the non-cellular network may occur and transmissions may have started so that despite the prior detecting steps collisions may still occur. In order to avoid or at least reduce this, in addition to detecting whether or not the frequency band is currently in use, a further step of transmitting a booking signal is used in order to indicate to devices communicating via the non-cellular network that the frequency band is not available for use as the base station is using or intends to use the frequency band. In this regard the booking signal may simply be a signal in the frequency band of a power sufficient to trigger detection by the devices that are listening for signals prior to transmitting. In such a case, the booking signal may be transmitted continuously before the time slot for transmitting the cellular signal or it may be transmitted within a time period where the devices are listening to see if the channel is clear. Alternatively the booking signal may have information in it indicating the time during which the base station is intending to transmit a signal in the frequency band for. In this regard it may mimic signals transmitted by devices communicating via the non-cellular network which may comprise header information indicating properties of the signals such as a length of time they will be transmitted for. The devices communicating via the non-cellular network are configured to be able to read and decode this information and schedule their transmissions in response to it.

In some aspects said step of transmitting said signal following transmission of said booking signal is performed at a start of a scheduled time slot performing said step of transmitting said signal.

Where the base station detects that the frequency band is not currently being used, then the booking signal is used in effect to reserve that frequency band until a start time of a scheduled timeslot for transmitting signals. In this regard, the booking signal may simply be a signal within that frequency band of a sufficient power to be detected by devices communicating within the non cellular network or alternatively, it may include information about the subsequent transmission such as its start and end time. In either case, it should be sufficient to notify devices transmitting using the non-cellular network that the frequency band is not currently available for use being used by the base station.

In an alternative technique, the method further comprises following detecting that said frequency band is being used, further detecting an acknowledgement signal from a user equipment indicating that said user equipment has received data from one of said access points, said step of transmitting said booking signal being performed during a predetermined time interval following detection of said acknowledgement signal and at a start of a scheduled time slot performing said step of transmitting said signal.

Where the monitoring step determines that the frequency band is in use, then in other techniques the method continues monitoring until it detects an acknowledgement signal form a user equipment indicating that the user equipment has successfully received data from one of the access points. This in an indication that the data transmission has completed and in response to this acknowledgment signal, the devices communicating within the non-cellular network will monitor the channel to see if it is free for subsequent transmissions. Thus, it is at this point that the base station can in effect reserve the frequency band for a subsequent transmission by transmitting the booking signal. In
this way, collision with an existing transmission is avoided and the base station notifies the other devices that it will be using this frequency band for the transmission of the signal.

In some aspects said booking signal comprises a header comprising an indication of a time period during which said base station is to be transmitting on said frequency band.
As noted previously, the booking signal may imitate signals sent by devices within the non-cellular network and may include information indicating a time period during which the base station is to be transmitting on the frequency band. This allows other devices to not use this frequency band until the transmission is complete.

In some aspects the method comprises scheduling transmission of said signal at a maximum transmission power level to user equipment located within said cell.
Once the frequency band has in effect been reserved then the signal can be transmitted at a maximum transmission power as there should not be a collision as the base station has notified other devices that it to use the frequency band and thus, signals can be scheduled to user equipment located anywhere within the cell as transmission at this power level should enable them to receive these signals at the required quality of service levels.

In some aspects the method comprises transmitting said signal in said frequency band during at least one predetermined cellular transmission time slot.
Once the frequency band has been determined to be available for use by the base station then the base station will transmit the signal in one or more transmission timeslots. In this regard, the number of timeslots that it will reserve will depend on the amount of data it has to transmit but will also be selected according to some resource sharing algorithm which allows the base station to share the channel resources with the non-cellular access devices.

In some aspects said step of monitoring comprises receiving signals from user equipment providing information of signal activity in said frequency band.

The monitoring of signals may be performed by a monitoring device on the base station itself. Alternatively and/or additionally, it may be performed at the user equipment with the user equipment transmitting signals to the base station. In this regard, user equipment periodically monitor the strength of signals received from other devices as this information is used in handover determinations in a cellular system. Thus user equipment are generally configured to transmit this type of information and providing additional signals relating to the non-cellular network can easily be done and may be a useful source of information regarding the signals being transmitted within the frequency band.

In some aspects said step of monitoring comprises monitoring at least one of a physical channel and a virtual channel.
When monitoring signals within the frequency band physical signals can be monitored, that is the strength of the data signals within that band, these being signals from either user equipment, access points or base stations. Alternatively and/or additionally, the virtual channel can be monitored. This is the control channel which comprises control information such as that present in the header data within the signals and provides information regarding such things as the length of time that the signal is transmitted, the power of the transmission signal and the identity of the transmitting device for example.

In some aspects where the base station determines that the frequency band is currently being used by non-cellular devices, then it may schedule signals to nearby user equipment and transmit them at a power level below a predetermined threshold power level. In this regard, it may select this power level such that it does not interfere with transmissions within the non-cellular network and it can select the user equipment that the signals are transmitted to in dependence upon this power level.

In some aspects the method further comprises determining path losses for signals travelling between said base station and a nearest transceiver operating in the non-cellular communication network; and setting said predetermined threshold power level in dependence upon said determined path losses, such that a signal transmitted at a power below said predetermined threshold power is below a value sufficient to trigger a signal detector detecting signals within said frequency band at said nearest non-cellular transceiver.

A nearest transceiver is in effect the nearest interferer or potential interferer and may be the access point device or a user equipment communicating with the access point. In order to determine a suitable threshold power, path losses for signals travelling between the base station and the nearest transceiver are determined and the threshold power level is set in dependence upon these determined power path losses. In effect this level is set such that a signal transmitted at this power level will be below a value sufficient to trigger a signal detector when it reaches the nearest transceiver. In this regard transceivers operating in the non-cellular communication network will have detectors for detecting other signals within the frequency band, these being used to detect and try to avoid collisions. Where a non-cellular device detects a colliding transmission it will back-off and not transmit signals on the channel for increasing lengths of time each time a collision is detected. Thus, where the base station transmits signals at a level below this detection level, then these signals will not affect the transmission of signals by the devices communicating via the non-cellular network and the problems that may arise due to extended back off of non-cellular communications that may arise due to the co-existence of the cellular and the non-cellular devices will be avoided or at least reduced. In this regard, given that nearby user equipment can be serviced at the lower power levels, when the base station is transmitting at maximum power having indicated its intention to the non-cellular devices to use the shared frequency band then it may be advantageous to schedule user equipment located far from the base station in preference to those located nearby which can be serviced even when the base station is not being given exclusive use of the frequency band.

In some aspects said step of determining said path losses comprises detecting a power level of a signal received from said nearest non-cellular transceiver at said base station and comparing said power level with an estimated value of said received signal transmission power level.

In order to determine the path losses, the power level of a signal received from the nearest transceiver should be compared with the power level that it is estimated that signal was transmitted at. This estimated value may comprise one of a determined maximum power level of transmission of said transceiver and a power level of transmission of said transceiver indicated in header data of a signal received from said transceiver.

In this regard, the power level of transmission might be known from information in the header data of the signal received; and where this is not known, then the maximum power level of transmission of the transceiver may be assumed. In this regard, the base station can update the power it uses for transmission of its signals by detecting whether or not there are any collisions and increasing or decreasing the power levels accordingly. In this regard a collision would be indicated by the base station detecting a non-cellular device backing off from any transmission it was making.

In some aspects said step of determining said path losses comprises receiving signals from user equipment indicating received signal power of signals transmitted by said nearest transceiver operating in the non-cellular communication network.

Path losses can also be determined using signals received from user equipment indicating powers of signals transmitted by different devices in its vicinity. These may be used in addition to signals detected at the base station itself or may be used as an alternative for these signals.

A second aspect of the present invention provides a computer program which when executed by a computer is operable to control the computer to perform a method according to a first aspect of the present invention.
A third aspect of the present invention provides a base station providing radio coverage within a cell of a cellular wireless communication network, said base station comprising: a monitor configured to monitor a frequency band used by at least one access point located within said cell and supporting non-cellular wireless communication, to determine whether said frequency band is currently being used for transmitting signals; a transmitter configured in response to detecting that said frequency band is currently idle to transmit a booking signal in said frequency band, said booking signal providing an indication to said at least one access point that said frequency band is not available for use and following transmission of said booking signal to transmit said signal in said frequency band, and in response to detecting that said frequency band is currently being used, to select user equipment that are determined to be located close enough to said base station to successfully receive signals at said power level below a predetermined threshold power level and to transmit signals at said power level below said predetermined threshold power level to said determined close user equipment.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates a flow diagram showing steps in a method according to an embodiment;
Figure 2 shows a cellular network node and a Wi-Fi node according to an embodiment;
Figure 3 schematically shows the cellular network node of Figure 2 monitoring for signals on the shared frequency band;
Figure 4 schematically shows the timings of signals transmitted by the user equipment, Wi-Fi node and cellular network node of Figures 2 and 3; and
Figure 5 schematically shows the cellular network node transmitting low power signals to nearby user equipment according to an embodiment.

### DESCRIPTION OF THE EMBODIMENTS

Before discussing the embodiments in any more detail, first an overview will be provided.

When LTE and Wi-Fi nodes are deployed in the same frequency band, Wi-Fi nodes tend to stay in listening mode when receiving interference from the LTE network, waiting for a channel access opportunity. Simulation results have shown that, when coexisting with LTE nodes, Wi-Fi nodes in a typical indoor scenario spend at least 96% of the time in listening mode due to inter-RAT (radio access technology) interference. This significantly degrades Wi-Fi performance.

In this regard, cellular networks such as LTE (long term evolution) networks provide user equipment UE with radio coverage in cells using network nodes or base stations. A user equipment moving between cells will have its connection to the network transferred to a new base station. Various techniques have been devised to reduce interference between signals transmitted to different devices within the cell such as intelligent scheduling of signals to the different devices by the base stations and the use of frequency division multiplexing of the signals.

Wireless communication using non-cellular networks where access points such as Wi-Fi nodes provide radio coverage to user equipment use different techniques to cellular networks to reduce interference. These access points use listening before transmitting methods to detect whether a frequency band or channel that they wish to use is currently available prior to transmitting a signal in this band. Thus, the avoidance of signal collision is handled differently in these two different technologies.

The coexistence of cellular base stations that use the same frequency band as non-cellular access points can therefore lead to collision unless compatible collision avoidance techniques are used.

Different solutions have been proposed to enhance LTE and Wi-Fi coexistence. These methods mostly rely on sacrificing some resources at the LTE network in order to mitigate the LTE interference to the Wi-Fi network, and then allow Wi-Fi transmissions.

Two proposed example solutions to the problem are:
Solution based on LTE blank subframes:
In this example, a modified version of ABS (almost blank subframes) is proposed to allow Wi-Fi coexistence. This modified version does not include reference signals, which results in a silent subframe. Since this modification is meant for new frequency bands, it is assumed that reference signals are not required for legacy support. During silent subframes, referred to here as blank subframes, Wi-Fi nodes detect channel vacancy as channel energy is below the threshold, and therefore are able to transmit. This way, LTE dominance over the available spectrum is reduced. The disadvantage for LTE networks is the loss of time resources, which inevitably decreases the throughput per user.

### Solution based on UL power control:

In this example, the use of LTE UL (uplink) power control to improve LTE and Wi-Fi coexistence is proposed. With the introduction of an additional factor to the conventional LTE UL power control, a controlled decrease of LTE UL transmit power is performed based on interference measurements, and this provides opportunity for Wi-Fi transmissions. The proposed LTE UL power control with interference aware power operating point is a flexible tool to deal with the trade-off between LTE and Wi-Fi performances, since it is able to set different LTE and Wi-Fi coexistence configurations with the choice of a single parameter. Simulation results show that the proposed approach can provide similar or better performance for both LTE and Wi-Fi networks than the previously proposed interference avoidance mechanism.

It would be desirable to allow LTE-U and Wi-Fi coexistence, while maximizing or at least increasing the spatial reuse of the spectrum.

To this end, embodiments employ listening techniques at the cellular base station such that the shared frequency band is monitored prior to the base station transmitting signals on it. If signals are detected within the frequency band, the base station will either transmit signals at a reduced power so as not to interfere with transmission by neighbouring devices transmitting on the non-cellular network, or it will indicate to the non-cellular devices, at a suitable time, that it is currently using, or intends to use the frequency band. In this regard as the base station monitors the use of the frequency band it can control its use of the frequency band and therefore control the degradation of the non-cellular performance that its use may cause.

The method runs independently at each LTE-U (long term evolution unlicensed spectrum) node, and has as a primary target to avoid or at least reduce packet collisions that can generate an exponential back-off at the Wi-Fi nodes. An excessive exponential back-off at a Wi-Fi node will make the Wi-Fi node unable to take any advantage of the potential scheduling opportunities provided by the LTE-U network to the Wi-Fi network in the short term. Therefore, LTE-U nodes need to transmit when Wi-Fi nodes are not transmitting to avoid this exponential back-off at the Wi-Fi nodes and allow a reactive system with Wi-Fi nodes able to benefit of any transmission opportunity. In this regard if a collision occurs when a Wi-Fi node is transmitting it will back off and will not transmit or sense the band again for a certain time, if this happens repeatedly the back-off time increases in an exponential fashion, which has a dramatic effect on the Wi-Fi's performance.

In order to realize the secondary target and maximize or at least increase spatial reuse, the LTE-U node will schedule low power almost blank subframes (LP-ABSs) while Wi-Fi nodes transmit their packets. The transmit power of the LP-ABSs is tuned such that any LTE-U node transmission does not trigger the carrier sensing energy detection mechanism at the Wi-Fi node. Estimation of the path losses between the LTE-U node and the nearest Wi-Fi nodes are required to carry out this operation. This information can be gathered through time using Wi-Fi sniffing capabilities at the LTE-U node. LTE-U UE measurements may also be used to get this path loss information, but they may require standardization.

It is proposed to equip each LTE-U node with a Wi-Fi capability. Carrier sensing through this Wi-Fi capability at the LTE-U node allows the node to transmit a normal frame if the channel is idle, or an LP-ABSs if the channel is busy. Optionally, these carrier sensing measurements to detect the status of the channel can also be assisted by LTE-U UE reports, which may require standardization.

It is important to note that the LTE-U and Wi-Fi systems are asynchronous. Therefore, when the LTE-U node decides to transmit a normal frame (idle channel detected via physical or virtual carrier sensing), and in the period between the time when the decision is made until the start of a new subframe slot, we propose that the LTE-U node transmits a channel booking signal. Since this signal is transmitted when the channel is idle or when a WiFi frame has just finished, it prevents or at least impedes Wi-Fi nodes from trying to access the channel and does not make them back off since they are in DIFS (distributed inter-frame space) which is the time period during which a device senses whether the frequency band is free or not. The transmit power of this channel booking signal has to be tuned such that it triggers the carrier sensing energy detection mechanism at the Wi-Fi nodes.

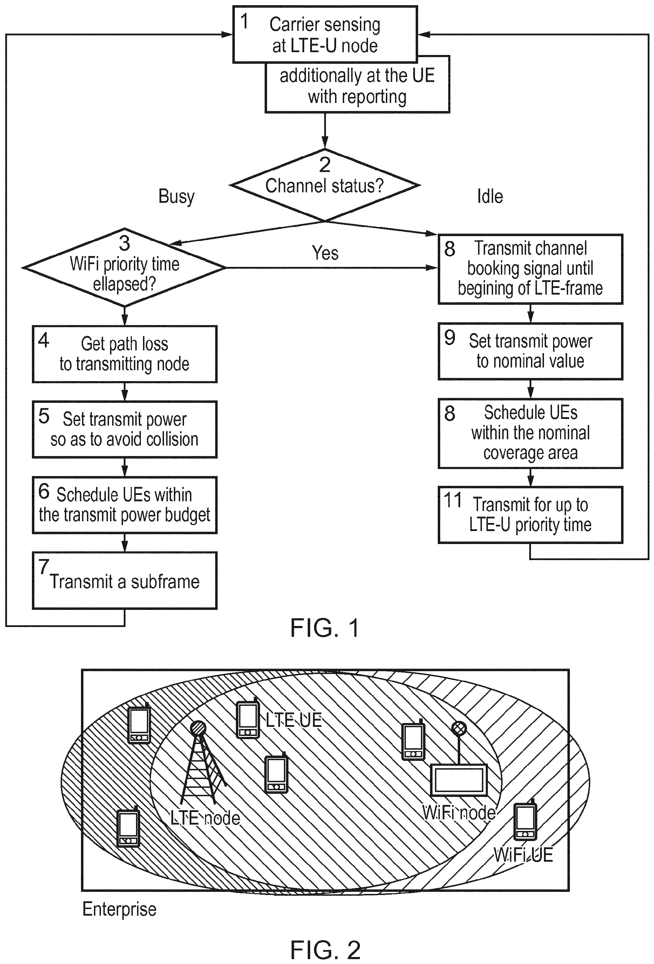

The different steps of this method are summarized in Figure 1, and they provide a large interference mitigation that allows co-existence between the LTE and Wi-Fi networks, and reduces the waste of resources since resources do not need to be blanked.

Figure 1 shows a flow diagram illustrating steps performed at a base station which is sharing a frequency band with Wi-Fi devices. The method starts by carrier sensing of the shared channel at the base station or LTE-U (Long Term Evolution Unlicensed Spectrum) node. This is to determine whether or not this frequency band is currently being used by any of the Wi-Fi devices. This carrier sensing may also and/ or alternatively be performed at the user equipment and reported to the base station. The base station is able to determine the channel status from the information received during this carrier sensing; that is whether it is busy or idle.

If it is busy, that is it is currently being used by the Wi-Fi devices, then it will determine if the Wi-Fi priority time has elapsed. In this regard, the cellular base station is configured to intelligently schedule its transmissions and it can be configured to control the sharing of the channel resource such that it may assign periods during which the non-cellular communications have priority. If one of these periods is pending then the base station will set its transmit power to a low value so as to avoid collision with non-cellular communications and will schedule transmission to user equipment that can receive signals at this low transmit power, that is user equipment located close to the base station.

It will then transmit a sub-frame to these user equipment. In this regard, in order to determine the value of this low transmit power, the base station will have determined the path loss to the nearest Wi-Fi transmitting device such that it can determine the power difference between the transmitted signal and the signal when it reaches this device. It can then set the transmission power such that the signal when it reaches the device does not have sufficient power to trigger any carrier sensing device on that device which might cause collisions resulting in the Wi-Fi device backing off. Once it has transmitted a sub-frame then it will return to carrier sensing.

If the Wi-Fi priority time has elapsed, then the base station may decide to use the resources itself and it will transmit a booking signal such that at the next sensing time the Wi-Fi devices that periodically sense during a predetermined time to determine whether or not the channel is free for their use, they will sense that it is not free as they will sense the booking signal sent by the base station.

This booking signal will also be transmitted by the base station if it detects the channel status to be idle. In this regard, where the channel status is detected to be idle, as the base station is not synchronised with the Wi-Fi devices it will not start transmitting until the start of a timeslot for its transmissions and by this time, the Wi-Fi devices may have started transmitting themselves unless the base station has transmitted this booking signal which indicates to the Wi-Fi devices that it is reserving the resources. In this regard, the booking signal may simply be a signal of a sufficient power for the Wi-Fi devices to detect it and recognise that the channel is in use or it may be a signal with information in the header device indicating the amount of time that the base station is planning to use the channel for.

Following transmission of this booking signal, the base station can schedule transmissions to user equipment within the cell using its usual transmit power, within the timeslots that it is determined it can use the frequency band for, which will allow for co-existence with the Wi-Fi communications.

Figure 2 shows an example scenario comprised of 1 LTE and 1 Wi-Fi node in an enterprise or business environment. These two nodes reuse the same frequency band and are located in different geographical positions within the enterprise (which is a site with multiple users such as a hotel, a shopping or conference centre, or an airport) with overlapping coverage. The LTE node is serving 4 UEs, while the Wi-Fi node is serving 2 UEs. Each UE has a given DL (downlink) and UL traffic and the resulting packets are stored in their respective DL and UL traffic buffers. For the sake of cooperation, the LTE node is configured to assess the Wi-Fi node in UE mode (i.e., the LTE node knows the ESSID (extended service set identifier) and password of the Wi-Fi node).

Using the presented scenario, the different stages of the proposed method summarized in Figure 1 are explained:

### Carrier sensing at LTE-U node

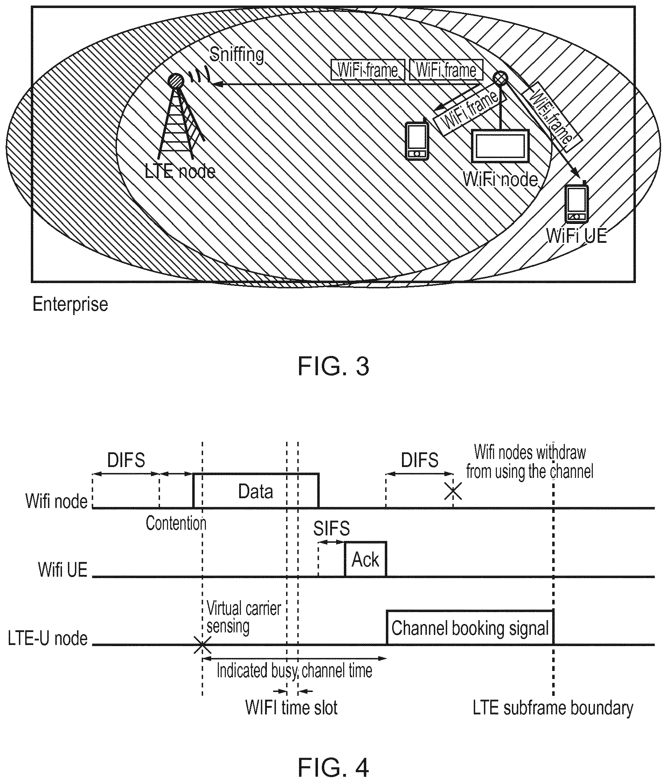

Figure 3 schematically shows how a LTE node senses Wi-Fi frames and therefore determines whether or not the shared frequency band is idle or busy. In this regard, there is a detecting or monitoring device on the LTE node which monitors the frequency band that is to be shared and determines whether or not Wi-Fi nodes are transmitting on this device. Thus, Wi-Fi frames transmitted either by Wi-Fi user equipment or by the Wi-Fi node itself may be detected at this device and indicate to it that the frequency band is currently being used.

With regard to the sensing at the LTE-U node, it is equipped with a Wi-Fi capability able to carry out the Wi-Fi standard carrier sensing procedure. This carrier sensing procedure is comprised of physical carrier sensing and virtual carrier sensing (see Fig. 1). Through physical carrier sensing, the LTE-U node can know whether other Wi-Fi equipment is using the channel at a point in time. Through virtual carrier sensing, the LTE-U node can know for how long the channel will be occupied by the transmission of a specific Wi-Fi transmission.

Using this capability, the LTE-U node can select to only transmit at higher powers when the channel is idle. In this way, the LTE-U node 'cooperates' with the Wi-Fi nodes in that it does not jam ongoing Wi-Fi transmissions and thus does not generate the need for packet retransmission and exponential back-off. A continuous back-off of a Wi-Fi node can result in a back-off time of up to 1023 Wi-Fi slots, around 9.207ms or equivalently 9 LTE-U frames, which would make the Wi-Fi node unable to take any transmission opportunity in the short them, i.e. < 10ms. Therefore, we consider this 'listening before talking' capability at the LTE-U node key for a successful LTE-U and Wi-Fi coexistence.

It is important to note that this carrier sensing is done at the LTE-U node, since it is the place where the Wi-Fi capability resides. Channel state estimations could be further enhanced if they are also performed at the LTE-U UEs. LTE-U UEs equipped with a Wi-Fi capability can perform carrier sensing and report meaningful values to the serving LTE-U node. For example, for how long the channel will be occupied in the vicinity of the given LTE-U UE. This reporting would require a standardized procedure between the LTE-U node and the LTE-U UE, and therefore it is an optional enhancement.

### Action to be taken if the channel is idle (channel booking signal)

The Wi-Fi capability at the LTE-U node may sense that the channel is idle and thus the LTE-U node can assume that the channel is ready for transmission. However, because the LTE-U and Wi-Fi networks are asynchronous, i.e., they are time slotted in a different manner, it may happen that from the time that the channel was assessed idle to the time when the LTE-U subframe slot begins, the channel may become busy again by some other Wi-Fi transmission. In order to make sure that the LTE-U node gains the channel by the time the LTE-U subframe slot begins and avoid possible collisions that may make Wi-Fi nodes start an exponential back-off, we propose that as soon as the decision to transmit has been made, the LTE-U node transmits a channel booking signal. This channel booking signal will be detected by the other Wi-Fi nodes and they will withdraw any attempt to access the channel (see Figure 4). It is important to note that the decision to transmit is made when the physical carrier sensing procedure estimates the channel to be idle and/or when the virtual carrier sensing procedure determines that the transmission of any ongoing Wi-Fi frame is over. Since the transmission of the channel booking signal takes into account the virtual sensing procedure, this channel booking signal does not collide with any Wi-Fi frame.

Fig. 4 shows how the channel booking signal is transmitted after the Wi-Fi UE ACK. The time for the transmission of the booking reference signal was retrieved from the virtual carrier sensing procedure. Since after the end of a Wi-Fi frame, all Wi-Fi nodes listen to the channel for a DIFS time, and because the channel booking signal is transmitted while the Wi-Fi nodes are in DIFS fashion, no collisions at any Wi-Fi node will be generated and the LTE-U can win the channel in a 'clean' manner. The power of this channel booking signal should be set in a way that can be received by all neighbouring Wi-Fi nodes.

By using this channel booking signal, the LTE-U node will impose its will to transmit and any WiFi node will withdraw from transmission, as soon as they detect the booking signal. Therefore, the LTE-U node should not abuse this booking reference signal and only use it to reinforce the optimal channel sharing time between the LTE-U and WiFi networks. The computation of this optimal channel sharing time is not discussed here.

Once the LTE-U node wins the channel by using the channel booking signal, it can transmit a normal subframe at nominal power and perform the standard scheduling, considering its entire pool of connected LTE-U UEs - standard operation. The LTE-U node should stop using the channel once it has no more data to transmit or it has occupied the channel for an adequate time according to its determined optimal or preferred channel sharing time between the LTE-U and WiFi networks.

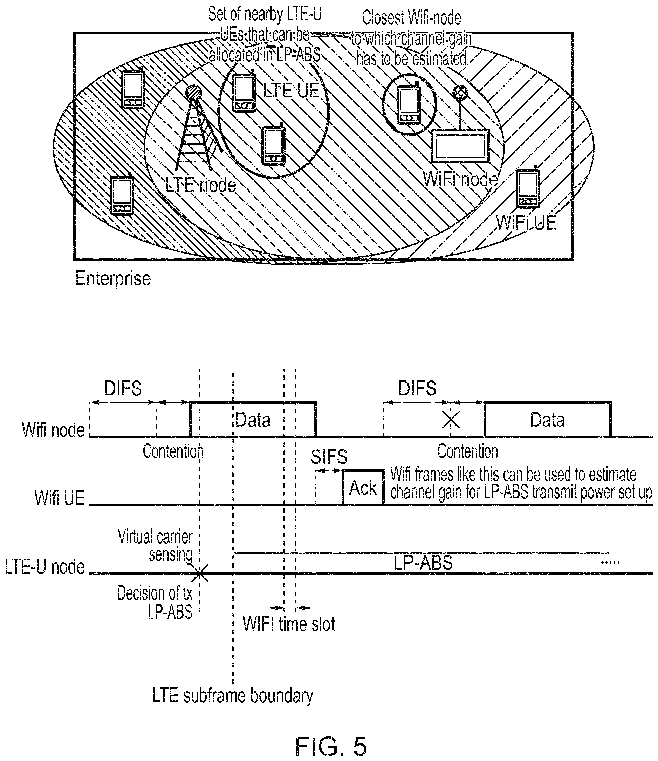

Figure 5 schematically shows the asynchronous nature of the Wi-Fi LTE transmissions. It also shows how the power level below power almost blank sub-frame transmissions is calculated and how it is scheduled to nearby user equipment. Thus, the base station will determine path losses to the closest Wi-Fi node which in this case is a user equipment transmitting to a Wi-Fi access point and will set its transmission power to be a value which will not cause collision at this nearest node. It can then determine which user equipment within the cell it can transmit successful to at this power and will schedule transmissions at this power to these user equipment. These are shown within the circle in Figure 5.

### Action to be taken if the channel is busy (LP-ABS)

The Wi-Fi capability at the LTE-U node may sense that the channel is busy and in this case the LTE-U node can assume that the channel is ready for transmission only under special circumstances, i.e., the LTE-U node should transmit with a reduced transmit power such that it does not create collisions at any Wi-Fi node. In order to do so, we propose that the LTE-U node learns the path loss to neighbouring Wi-Fi nodes, estimates the transmit power required such that collisions at the closest Wi-Fi node are avoided and then schedules LTE-U UEs which are within the reach of such transmit power in the resulting LP-ABSs.

The path loss or channel gain between the LTE-U node and a Wi-Fi node can be learnt through time due to the static nature of Wi-Fi nodes. Wi-Fi nodes are usually indoors and their mobility is low or zero. Thus, the Wi-Fi capability at the LTE-U node can decode Wi-Fi frames and estimate such channel gains. These channel gains can be computed as the difference between the received and transmit power of a valid Wi-Fi symbol, and these measurements can be averaged over time to achieve reliable estimations. The MAC (medium access control) address of the source Wi-Fi node in the MAC header of the Wi-Fi frame helps to identify the ID of the transmitting Wi-Fi node. The received power of a Wi-Fi symbol at the LTE-U node can be computed by using standard procedures provided by the Wi-Fi capability. The transmit power of a Wi-Fi node may be hard to assess and may only be known through proprietary interfaces to the Wi-Fi node. In this regard, the FCC (federal communications commission) regulations give the highest allowable EIRP (effective isotropic radiative power) and limits it to 1W. But that doesn't mean that all nodes will transmit at that level, and definitely not UEs due to battery issues. 1W is also very high for a typical indoor AP (access point). Typical transmit powers of Wi-Fi APs are around 100-250mW, and enterprise Wi-Fi APs also allow their transmit powers to be adjusted to enable "cell planned" deployments.

As a result, we propose the standardization of a field accommodated in some Wi-Fi frames that indicate the transmit power of the Wi-Fi node. If such information does not exist, the LTE-U node can still set its transmit power in the LP-ABSs to a value calculated assuming that the Wi-Fi node is transmitting at the maximum transmit power allowed for the band, check whether a collision has occurred in the channel (the Wi-Fi node stops transmitting) and then increase/decrease its transmit power accordingly. This procedure can be carried out through time since the transmit power of Wi-Fi nodes does not change often due to their static nature. A packet collision is detected by the LTE-U by transmitting a packet while the Wi-Fi node is transmitting a packet and measuring the channel afterwards in order to check whether the Wi-Fi node has backed off or continues transmitting. The system can afford to lose some Wi-Fi frames in this learning stage for the sake of an enhanced LTE-U and Wi-Fi coexistence.

Alternatively, instead of setting the transmit powers in the LP-ABSs arbitrarily, the LTE-U node can estimate the path loss between itself and its UEs through mechanisms available in the UL power control procedure. The LTE-U node can therefore estimate the minimum transmit power levels during the LP-ABSs it has to use to serve the UE with the lowest path-loss at its required QoS (quality of service) level. If this does not result in a collision with the Wi-Fi node, then the LTE-U node then increases its power to serve the UE with the second lowest path-loss, and so on. This step repeats and the LTE-U node can gradually increases its transmit power up to a maximum defined limit for LP-ABSs or until collisions with the WiFi node occurs.

Once the transmit power of the LP-ABS is set, the LTE-U node can operate as an LTE BS (base station) would operate in a LP-ABS (low power almost blank subframe), scheduling cell-centre LTE-U UEs that are near to the node and thus require low transmit powers to successfully carry their transmissions.

As soon as the channel is detected idle by the Wi-Fi capability at the LTE-U node, it can stop transmitting LP-ABSs and start transmitting normal subframes. This procedure was described in the previous section.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.
It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method performed at a base station providing radio coverage within a cell of a cellular wireless communication network, said method comprising:
prior to transmitting a signal within a frequency band used by at least one access point located within said cell and supporting non-cellular wireless communication, monitoring to determine whether said frequency band is currently being used for transmitting signals;
in response to detecting that said frequency band is currently idle, transmitting a booking signal in said frequency band, said booking signal indicating to said at least one access point that said frequency band is not available for use; and
transmitting said signal in said frequency band; and
in response to detecting that said frequency band is currently being used to transmit signals, selecting user equipment that are determined to be located close enough to said base station to successfully receive signals at a power level below a predetermined threshold power level and scheduling transmission of signals at said power level below said predetermined threshold power level to said selected user equipment.

2. A method according to claim 1, wherein said step of transmitting said signal following transmission of said booking signal is performed at a start of a scheduled time slot.

3. A method according to any preceding claim, wherein said booking signal comprises a header comprising an indication of a time period during which said base station is to be transmitting on said frequency band.

4. A method according to any preceding claim, wherein said step of transmitting said signal in said frequency band performed following transmitting said booking signal comprises scheduling transmission of said signal at a maximum transmission power level to user equipment located within said cell.

5. A method according to any preceding claim, comprising transmitting said signal in said frequency band during at least one predetermined cellular transmission time slot.

6. A method according to any preceding claim, wherein said step of monitoring comprises receiving signals from user equipment providing information of signal activity in said frequency band.

7. A method according to any preceding claim, wherein said step of monitoring comprises monitoring at least one of a physical channel and a virtual channel.

8. A method according to any preceding claim , further comprising:
determining path losses for signals travelling between said base station and a nearest transceiver operating in the non-cellular communication network; and
setting said predetermined threshold power level in dependence upon said determined path losses, such that a signal transmitted at a power below said predetermined threshold power is below a value sufficient to trigger a signal detector detecting signals within said frequency band at said nearest non-cellular transceiver.

9. A method according to claim 8, wherein said step of determining said path losses comprises detecting a power level of a signal received from said nearest non-cellular transceiver at said base station and comparing said power level with an estimated value of said received signal transmission power level.

10. A method according to claim 9, wherein said estimated value comprises one of:
a determined maximum power level of transmission of said transceiver and a power level of transmission of said transceiver indicated in header data of a signal received from said transceiver.

11. A method according to any one of claims 9 to 10, wherein said step of determining said path losses comprises receiving signals from user equipment indicating received signal power of signals transmitted by said nearest transceiver operating in said non-cellular network.

12. A computer program which when executed by a computer is operable to control said computer to perform a method according to any one of claims 1 to 11.

13. Abase station providing radio coverage within a cell of a cellular wireless communication network, said base station comprising:
a monitor configured to monitor a frequency band used by at least one access point located within said cell and supporting non-cellular wireless communication, to determine whether said frequency band is currently being used for transmitting signals;
a transmitter configured in response to detecting that said frequency band is currently idle to transmit a booking signal in said frequency band, said booking signal providing an indication to said at least one access point that said frequency band is not available for use and following transmission of said booking signal to transmit said signal in said frequency band, and in response to detecting that said frequency band is currently being used, to select user equipment that are determined to be located close enough to said base station to successfully receive signals at said power level below a predetermined threshold power level and to transmit signals at said power level below said predetermined threshold power level to said determined close user equipment.

## Patentansprüche

1. Verfahren, das durchgeführt wird an einer Basisstation, zum Bereitstellen von Funkabdeckung innerhalb einer Zelle eines zellularen drahtlosen Kommunikationsnetzwerks, wobei besagtes Verfahren umfasst:
vor dem Übertragen eines Signals innerhalb eines Frequenzbandes, das an mindestens einem Zugangspunkt verwendet wird, der innerhalb besagter Zelle lokalisiert ist und nicht zellulare drahtlose Kommunikation unterstützt, Überwachen zum Bestimmen, ob besagtes Frequenzband momentan verwendet wird zum Übertragen von Signalen;
als Antwort auf das Erkennen, dass sich besagtes Frequenzband momentan im Ruhemodus befindet, Übertragen eines Buchungssignals in besagtem Frequenzband, wobei besagtes Buchungssignal besagtem mindestens einen Zugriffspunkt anzeigt, dass besagtes Frequenzband nicht zum Gebrauch zur Verfügung steht; und
Übertragen besagten Signals in besagtem Frequenzband; und
als Antwort auf das Erkennen, dass besagtes Frequenzband momentan verwendet wird zum Übertragen von Signalen, Auswählen eines Benutzergeräts, das bestimmt wird als ein solches, das sich nah genug befindet zu besagter Basisstation, um erfolgreich Signale mit einer Leistungsstufe zu empfangen, die unterhalb einer vorbestimmten Schwellenwertleistungsstufe liegt, und Planen der Übertragung von Signalen mit besagter Leistungsstufe unterhalb besagter vorbestimmten Schwellenwertleistungsstufe an besagtes ausgewählte Benutzergerät.

2. Verfahren nach Anspruch 1, wobei besagter Schritt des Übertragens besagten Signals nach dem Übertragen besagten Buchungssignals durchgeführt wird an einem Start eines geplanten Zeitschlitzes.

3. Verfahren nach einem beliebigen der vorhergehenden Ansprüche, wobei besagtes Buchungssignal umfasst einen Header, der eine Anzeige eines Zeitraumes umfasst, während dessen besagte Basisstation auf besagtem Frequenzband überträgt.

4. Verfahren nach einem beliebigen der vorhergehenden Ansprüche, wobei besagter Schritt des Übertragens besagten Signals in besagtem Frequenzband, der nach dem Übertragen besagten Buchungssignals durchgeführt wird, eine Planung der Übertragung besagten Signals mit einer maximalen Übertragungsleistungsstufe an das Benutzergerät umfasst, das innerhalb besagter Zelle lokalisiert ist.

5. Verfahren nach einem beliebigen der vorhergehenden Ansprüche, umfassend das Übertragen besagten Signals in besagtem Frequenzband während mindestens eines vorbestimmten Zeitschlitzes für die zellulare Übertragung.

6. Verfahren nach einem beliebigen der vorhergehenden Ansprüche, wobei besagter Schritt des Überwachens umfasst das Empfangen von einem Benutzergerät, das Information bereitstellt, von Signalaktivität in besagtem Frequenzband.

7. Verfahren nach einem beliebigen der vorhergehenden Ansprüche, wobei besagter Schritt des Überwachens umfasst das Überwachen mindestens eines physischen Kanals und eines virtuellen Kanals.

8. Verfahren nach einem beliebigen der vorhergehenden Ansprüche, weiterhin umfassend:
Bestimmen von Pfadverlusten für Signale, die sich zwischen besagter Basisstation und einem nahegelegensten Transceiver bewegen, der in dem nicht zellularen Kommunikationsnetzwerk betrieben wird; und
Einstellen besagter vorbestimmten Schwellenwertleistungsstufe in Abhängigkeit besagter bestimmter Pfadverluste, sodass ein Signal, das mit einer Leistung unterhalb besagter vorbestimmten Schwellenwertleistung übertragen wird, unterhalb eines Wertes liegt, der hinreichend ist für das Auslösen eines Signaldetektors, der Signale innerhalb besagten Frequenzbandes an besagtem nahegelegensten nicht zellularen Transceiver erkennt.

9. Verfahren nach Anspruch 8, wobei besagter Schritt des Bestimmens besagter Pfadverluste umfasst das Erkennen einer Leistungsstufe eines Signals, das empfangen wird von besagtem nahegelegensten nicht zellularen Transceiver an besagter Basisstation und Vergleichen besagter Leistungsstufe mit einem geschätzten Wert besagter Überragungsleistungsstufe des empfangenen Signals.

10. Verfahren nach Anspruch 9, wobei besagter geschätzter Wert umfasst eines aus:
eine bestimmte maximale Leistungsstufe der Übertragung besagten Transceivers und eine Leistungsstufe der Übertragung besagten Transceivers, die angegeben wird in Header-Daten eines Signals, welches von besagtem Transceiver empfangen wird.

11. Verfahren nach einem beliebigen der Ansprüche 9 bis 10, wobei besagter Schritt des Bestimmens besagter Pfadverluste umfasst das Empfangen von Signalen von dem Benutzergerät und Anzeigen der empfangenen Signalleistung von Signalen, die von dem nahegelegensten Transceiver übertragen worden sind, der in besagtem nicht zellularen Netzwerk betrieben wird.

12. Computerprogramm, welches, wenn es von einem Computer ausgeführt wird, betreibbar ist zum Steuern besagten Computers zum Durchführen eines Verfahrens, das einem beliebigen der Ansprüche 1 bis 11 entspricht.

13. Basisstation, die Funkabdeckung innerhalb einer Zelle eines zellularen drahtlosen Kommunikationsnetzwerks bereitstellt, wobei besagte Basisstation umfasst:
einen Monitor, der konfiguriert ist zum Überwachen eines Frequenzbandes, das verwendet wird von mindestens einem Zugangspunkt, der innerhalb besagter Zelle lokalisiert ist und nicht zellulare drahtlose Kommunikation unterstützt, zum Überwachen, ob besagtes Frequenzband momentan verwendet wird zum Übertragen von Signalen;
einen Sender, der konfiguriert ist, als Antwort auf das Erkennen, dass sich besagtes Frequenzband momentan im Ruhemodus befindet, zum Übertragen eines Buchungssignals in besagtem Frequenzband, wobei besagtes Buchungssignal eine Anzeige für besagten mindestens einen Zugangspunkt bereitstellt, das besagtes Frequenzband nicht verfügbar ist für den Gebrauch und, nach der Übertragung besagten Buchungssignals zum Übertragen besagten Signals in besagtem Frequenzband und als Antwort auf das Erkennen, dass besagtes Frequenzband momentan benutzt wird, zum Auswählen eines Benutzergeräts, das bestimmt wird als ein solches, das sich nah genug befindet zu besagter Basisstation, um erfolgreich Signale mit besagter Leistungsstufe zu empfangen, die unterhalb einer vorbestimmten Schwellenwertleistungsstufe liegt, und zum Übertragen von Signalen mit besagter Leistungsstufe unterhalb besagter vorbestimmten Schwellenwertleistungsstufe an besagtes bestimmte nahe Benutzergerät.

## Revendications

1. Procédé mis en oeuvre au niveau d'une station de base fournissant une couverture radio dans une cellule d'un réseau de communication sans fil cellulaire, ledit procédé comprenant les étapes suivantes :
avant de transmettre un signal dans une bande de fréquence utilisée par au moins un point d'accès situé dans ladite cellule et prenant en charge une communication sans fil non cellulaire, effectuer une surveillance pour déterminer si ladite bande de fréquence est actuellement utilisée pour la transmission de signaux ;
en réponse à la détection du fait que ladite bande de fréquence est actuellement inactive, transmettre un signal de réservation dans ladite bande de fréquence, ledit signal de réservation indiquant audit ou auxdits points d'accès que ladite bande de fréquence n'est pas disponible à l'utilisation ; et
transmettre ledit signal dans ladite bande de fréquence ; et
en réponse à la détection du fait que ladite bande de fréquence est actuellement utilisée pour transmettre des signaux, sélectionner des équipements d'utilisateur qui sont déterminés comme étant suffisamment proches de ladite station de base pour recevoir avec succès des signaux à un niveau de puissance en dessous d'un seuil de niveau de puissance prédéterminé et programmer la transmission des signaux audit niveau de puissance en dessous dudit seuil de niveau de puissance prédéterminé vers lesdits équipements d'utilisateur sélectionnés.

2. Procédé selon la revendication 1, dans lequel ladite étape de transmission dudit signal à la suite de la transmission dudit signal de réservation est réalisée au début d'un intervalle de temps programmé.

3. Procédé selon l'une quelconque des revendications précédentes, dans lequel ledit signal de réservation comprend un en-tête contenant une indication d'un laps de temps durant lequel ladite station de base doit transmettre sur ladite bande de fréquence.

4. Procédé selon l'une quelconque des revendications précédentes, dans lequel ladite étape de transmission dudit signal dans ladite bande de fréquence réalisée à la suite de la transmission dudit signal de réservation comprend la programmation de la transmission dudit signal à un niveau de puissance d'émission maximal vers les équipements d'utilisateur situés dans ladite cellule.

5. Procédé selon l'une quelconque des revendications précédentes, comprenant la transmission dudit signal dans ladite bande de fréquence durant au moins un intervalle de temps de transmission cellulaire prédéterminé.

6. Procédé selon l'une quelconque des revendications précédentes, dans lequel ladite étape de surveillance comprend la réception de signaux en provenance d'équipements d'utilisateur fournissant des informations d'activité de signal dans ladite bande de fréquence.

7. Procédé selon l'une quelconque des revendications précédentes, dans lequel ladite étape de surveillance comprend la surveillance d'au moins un canal parmi un canal physique et un canal virtuel.

8. Procédé selon l'une quelconque des revendications précédentes, comprenant en outre les étapes suivantes :
déterminer des affaiblissements de propagation pour les signaux se propageant entre ladite station de base et un émetteur-récepteur le plus proche fonctionnant dans le réseau de communication non cellulaire ; et
régler ledit seuil de niveau de puissance prédéterminé en fonction desdits affaiblissements de propagation déterminés, de sorte qu'un signal émis à une puissance en dessous dudit seuil de puissance prédéterminé soit en dessous d'une valeur suffisante pour déclencher un détecteur de signal détectant les signaux dans ladite bande de fréquence au niveau dudit émetteur-récepteur non cellulaire le plus proche.

9. Procédé selon la revendication 8, dans lequel ladite étape de détermination desdits affaiblissements de propagation comprend la détection d'un niveau de puissance d'un signal reçu en provenance dudit émetteur-récepteur non cellulaire le plus proche au niveau de ladite station de base et la comparaison dudit niveau de puissance à une valeur estimée du niveau de puissance d'émission dudit signal reçu.

10. Procédé selon la revendication 9, dans lequel ladite valeur estimée comprend un élément parmi : un niveau de puissance d'émission maximal déterminé dudit émetteur-récepteur et un niveau de puissance d'émission dudit émetteur-récepteur indiqué dans les données d'en-tête d'un signal reçu en provenance dudit émetteur-récepteur.

11. Procédé selon l'une quelconque des revendications 9 à 10, dans lequel ladite étape de détermination desdits affaiblissements de propagation comprend la réception de signaux en provenance d'équipements d'utilisateur indiquant la puissance de réception de signal des signaux émis par ledit émetteur-récepteur le plus proche fonctionnant dans ledit réseau non cellulaire.

12. Programme informatique qui lorsqu'il est exécuté par un ordinateur permet de commander audit ordinateur de mettre en oeuvre le procédé selon l'une quelconque des revendications 1 à 11.

13. Station de base fournissant une couverture radio dans une cellule d'un réseau de communication sans fil cellulaire, ladite station de base comprenant :
un dispositif de surveillance configuré pour surveiller une bande de fréquence utilisée par au moins un point d'accès situé dans ladite cellule et prenant en charge une communication sans fil non cellulaire, afin de déterminer si ladite bande de fréquence est actuellement utilisée pour transmettre des signaux ;
un émetteur configuré en réponse à la détection du fait que ladite bande de fréquence est actuellement inactive pour transmettre un signal de réservation dans ladite bande de fréquence, ledit signal de réservation fournissant une indication audit ou auxdits points d'accès selon laquelle ladite bande de fréquence n'est pas disponible à l'utilisation et à la suite de la transmission dudit signal de réservation pour transmettre ledit signal dans ladite bande de fréquence, et en réponse à la détection du fait que ladite bande de fréquence est actuellement utilisée, pour sélectionner des équipements d'utilisateur dont il est déterminé qu'ils se situent suffisamment près de ladite station de base pour recevoir avec succès des signaux audit niveau de puissance en dessous d'un seuil de niveau de puissance prédéterminé et pour transmettre des signaux audit niveau de puissance en dessous dudit seuil de niveau de puissance prédéterminé auxdits équipements d'utilisateur proches déterminés.
